# FASCICULE DE BREVET EUROPEEN

(11) **EP 1 716 038 B1**
(45) Date de publication et mention de la délivrance du brevet: **09.04.2008**
(21) Numéro de dépôt: 05717643.0
(22) Date de dépôt: 17.02.2005
(51) Int. Cl.: B62D 29/00

(54) **STRUCTURE COMPOSITE EN METAL ET MATIERE PLASTIQUE, EN PARTICULIER POUR UNE FACE AVANT DE VEHICULE AUTOMOBILE**
METALL- UND KUNSTSTOFFVERBUNDSTRUKTUR, INSBESONDERE FÜR DIE VORDERSEITE EINES KRAFTFAHRZEUGS
METAL AND PLASTIC COMPOSITE STRUCTURE, IN PARTICULAR FOR THE FRONT FACE OF A MOTOR VEHICLE

(30) Priorité: 17.02.2004 FR 0401565
(43) Date de publication de la demande: 02.11.2006
(73) Titulaire: VALEO SYSTEMES THERMIQUES, 78321 Le Mesnil St Denis Cedex (FR)
(72) Inventeur: BOUMAZA, François, F-75015 Paris (FR); LANARD, Jean-Louis, F-78810 Feucherolles (FR); GUYOMARD, Jean-Nicolas, F-27930 Le Mesnil Fuguet (FR)
(74) Mandataire: Rolland, Jean-Christophe
(86) Numéro de dépôt international: PCT/FR2005/000375
(87) Numéro de publication internationale: WO 2005/090146

(56) Documents cités:
- EP-A- 1 380 493
- FR-A- 2 763 113
- US-A- 6 131 897
- US-A1- 2003 001 410
- US-A1- 2003 070 387

## Description

L'invention concerne une structure composite en métal et en matière plastique pouvant être utilisée notamment pour la fabrication de pièces de véhicules automobiles.

On connaît déjà des structures composites de ce genre, parfois appelées aussi "structures hybrides", qui comprennent un insert métallique présentant une âme conformée de profil choisi ayant deux régions marginales opposées, et un renfort en matière plastique, surmoulé sur une partie au moins de l'insert.

De telles structures composites trouvent une application particulière dans la réalisation de faces avant de véhicules automobiles, qu'elles soient faites en une ou plusieurs parties.

Une face avant constitue un sous-ensemble, qui peut être réalisé par un équipementier, et le constructeur automobile n'a plus qu'à le présenter à l'avant du véhicule et à le fixer sur des éléments de structure du véhicule.

Cette face avant sert à supporter différents composants tels que, par exemple, des blocs d'éclairage, des échangeurs de chaleur, des avertisseurs sonores, des serrures de capot, etc.

L'un des problèmes que pose la réalisation des structures composites du type précité est celui de l'accrochage du renfort en matière plastique sur l'insert métallique, du fait que ce renfort est habituellement surmoulé sur une partie au moins de l'insert.

Une solution connue par le brevet EP 1 213 207 est de réaliser le lien mécanique par un cerclage de l'insert métallique par le renfort en matière plastique. Ce cerclage est réalisé au cours de l'injection de la matière plastique. Pour réaliser ce cerclage, il est nécessaire de surmouler des bandes de matière plastique par dessus l'insert, ce qui complique la fabrication.

De plus, des trous sont habituellement prévus dans la tôle métallique de l'insert pour faciliter l'accrochage de la matière plastique.

Ces trous nécessitent donc des opérations d'usinage particulières et en outre ont tendance à affaiblir la structure composite ainsi obtenue.

Cet inconvénient se retrouve également dans la structure décrite dans le document DE 203 10 656, dans laquelle des trous ou analogues sont formés dans la tôle de l'insert métallique pour faciliter l'accrochage de la matière plastique.

Il existe encore d'autres solutions, comme par exemple, celle du document WO 02/068258, qui nécessite de surmouler la presque totalité de l'insert pour permettre un accrochage de la matière plastique.

Ces solutions connues nécessitent par conséquent une grande quantité de matière plastique par rapport à l'insert.

Encore une autre solution est divulguée par le document EP1380493 et propose une structure composite comprenant un insert métallique et renfort en matière plastique surmoulé; un élément de renforcement recouvre l'âme et les régions marginales de l'insert et relie deux régions d'extrémité par un cerclage de bandes plastiques.

L'invention a notamment pour but de surmonter les inconvénients précités.

Elle vise notamment à procurer une structure composite du type précité dans laquelle l'accrochage entre le métal et la matière plastique s'effectue par des moyens qui s'apparentent à un cerclage, mais sans perçage de la tôle de l'insert.

L'invention vise encore à procurer une structure hybride du type précité qui trouve une application particulière dans la réalisation de faces avant de véhicules automobiles.

L'invention propose à cet effet une structure composite du type défini en introduction, dans laquelle l'âme de l'insert comporte au moins une partie emboutie qui s'étend dans une direction généralement transversale par rapport à l'une au moins des régions marginales de l'âme, et dans laquelle le renfort comporte au moins un élément de renforcement qui recouvre la partie emboutie de l'insert et qui relie deux régions d'extrémité recouvrant respectivement les deux régions marginales de l'âme.

Ainsi, l'accrochage s'effectue par coopération d'une partie emboutie formée dans l'insert et d'un élément de renforcement qui fait partie du renfort et qui vient recouvrir cette partie emboutie pour réaliser un accrochage et un blocage mécanique.

La partie emboutie est de préférence réalisée sous la forme d'une rainure, c'est à dire d'un relief en creux, et l'élément de renforcement sous la forme d'une nervure qui est reçue dans la rainure.

Il est à noter que la réalisation d'une rainure dans un insert de ce type, qui est une tôle métallique, forme aussi une nervure sur une face opposée de la tôle. Autrement dit, la partie emboutie forme d'un côté une rainure et de l'autre une nervure.

Lorsque la partie emboutie est une nervure, l'élément de renforcement est avantageusement réalisé sous la forme d'une nervure qui recouvre la nervure.

Comme déjà indiqué, la partie emboutie forme habituellement, d'une part une rainure qui débouche sur une face de l'âme de l'insert, et d'autre part une nervure qui débouche sur une autre face de l'âme de l'insert.

Il est avantageux en ce cas que la partie de renforcement forme d'un côté une première nervure qui recouvre la rainure de l'insert et, de l'autre côté, une deuxième nervure qui recouvre la nervure de l'insert.

De façon avantageuse, l'âme de l'insert présente un profil ouvert, par exemple en forme de U, avec une face interne et une face externe. En ce cas, la partie emboutie peut être formée soit sur la face interne de l'âme, soit sur la face externe de l'âme, soit encore à la fois sur la face interne et la face externe.

Pour faciliter l'accrochage, il est avantageux que l'une au moins des régions d'extrémité du renfort soit agencée sous la forme d'une lèvre qui recouvre une région marginale de l'âme.

Pour améliorer encore l'accrochage mécanique, il est avantageux que l'une au moins des régions d'extrémité du renfort soit agencée sous la forme d'un bord crénelé.

De plus, l'une au moins de ces régions d'extrémité peut être agencée sous la forme d'un bord relevé.

De manière préférentielle, la partie emboutie de l'insert s'étend de l'une à l'autre des régions marginales de l'âme. Cependant, il est envisageable aussi que cette partie emboutie s'étende seulement sur une partie de l'âme entre les régions marginales de l'âme.

La structure composite de l'invention fait avantageusement partie intégrante d'au moins un élément d'une face avant de véhicule automobile.

Dans la description qui suit, faite seulement à titre d'exemple, on se réfère aux dessins annexés, sur lesquels :
- la figure 1 est une vue en perspective d'un insert métallique à profil général en U selon l'invention ;
- la figure 2 représente l'insert de la figure 1 surmoulé par un renfort en matière plastique pour former une structure composite selon l'invention ;
- la figure 3 représente une vue en perspective d'une structure composite selon l'invention comportant une partie emboutie en saillie vers l'extérieur ;
- la figure 4 est une vue en coupe selon la ligne IV-IV de la figure 3 ;
- la figure 5 est une vue analogue à la figure 4 dans une variante de réalisation ;
- les figures 6 et 7 sont d'autres vues en coupe illustrant deux autres variantes ;
- les figures 8 à 10 sont des vues de dessus d'une structure composite selon l'invention comportant un insert à profil en U et un renfort en matière plastique comportant des nervures de renforcement, formant croisillons, selon différentes variantes ;
- la figure 11 est une vue en perspective d'un autre insert selon l'invention dont l'âme comporte un profil étagé, du type escalier avec une partie emboutie ; et
- la figure 12 représente l'insert de la figure 11 sur lequel est surmoulé un renfort en matière plastique pour former une structure composite selon l'invention.

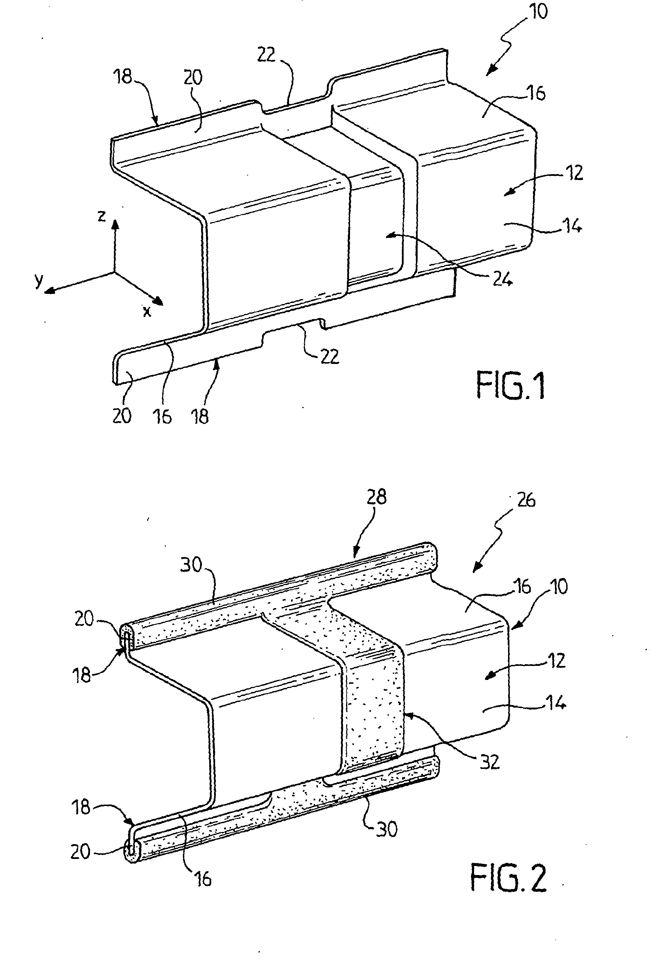

On se réfère d'abord à la figure 1 qui représente un insert 10 selon l'invention comportant une âme 12 formée d'une tôle métallique pliée pour définir un profil en forme générale de U. Le profil est défini par des génératrices parallèles à un axe Y d'un système trirectangle à trois axes X, Y et Z. L'âme 12 comporte un fond 14 généralement plat auquel se raccordent deux ailes 16, dont chacune se termine par des régions marginales 18 opposées, réalisées chacune sous la forme d'un bord tombé 20. Ces deux bords tombés 20 sont sensiblement coplanaires et parallèles au plan du fond 14, et s'étendent vers l'extérieur du profil en U, tel que défini par le fond 20 et les deux ailes 16. En outre, chacun des bords tombés 20 comporte un crénelage 22 pour définir un bord crénelé.

L'âme 12 comporte en outre une partie emboutie 24 qui s'étend dans une direction généralement transversale par rapport aux régions marginales 18. Cette partie emboutie 24 présente une forme générale en U et forme, d'une part, une rainure qui débouche vers l'extérieur du profil en U et d'autre part une nervure (non visible sur la figure 1) qui débouche vers l'intérieur du profil en U. Dans l'exemple, cette partie emboutie 24 s'étend de l'une à l'autre des régions marginales 18 et forme ainsi un relief continu dans le fond 14 et les deux ailes 16.

On se réfère maintenant à la figure 2 qui représente une structure composite 26 résultant du surmoulage d'un renfort 28 en matière plastique sur l'insert 10 de la figure 1. Le renfort 28 comporte deux régions d'extrémité 30, chacune réalisée sous la forme d'une lèvre en U, recouvrant un bord tombé 20 et coopérant ainsi avec les crénelages 22. Ces deux régions d'extrémité 30 constituent ainsi deux éléments longitudinaux à profil en U qui s'étendent le long des régions marginales 18 de l'insert 10.

Les deux régions d'extrémité 30 sont formées d'une seule pièce avec un élément de renforcement 32 qui vient recouvrir la partie emboutie 24 de l'insert. Cet élément 32 est surmoulé dans la partie emboutie 24 du côté extérieur du profilé en U, c'est à dire dans la rainure que forme ce-tte partie emboutie. Autrement dit, l'élément de renforcement 32 constitue une nervure qui est engagée dans la rainure que forme la partie emboutie 24. On forme ainsi un cerclage partiel qui assure la liaison entre les régions d'extrémité 30 du renfort 28 et empêche tout déplacement du renfort en translation dans une direction généralement parallèle aux génératrices que définit le profil en U de l'insert, c'est-à-dire dans la direction de l'axe Y.

Cette solution offre l'avantage de réaliser un bon accrochage mécanique, sans qu'il soit nécessaire de pratiquer des trous dans l'épaisseur de l'insert.

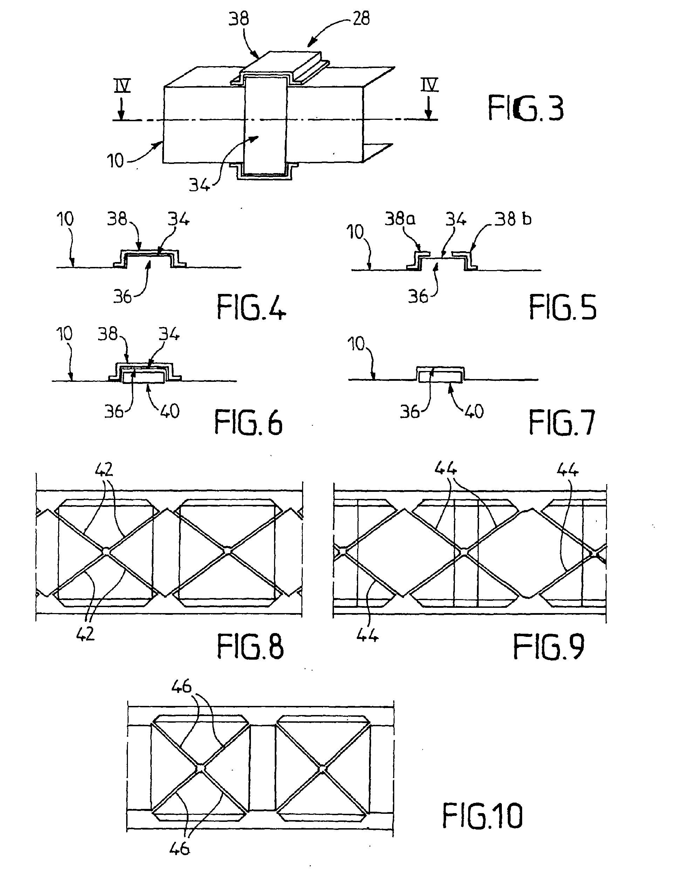

La figure 3 montre un insert 10 analogue à celui de la figure 1 qui présente également un profil en U. Cependant, à la différence de la figure 1, cet insert 10 comporte ici une partie emboutie 34 qui définit une nervure en U en saillie vers l'extérieur du profil. Cela signifie que cette partie emboutie 34 définit au contraire une rainure 36 vers l'intérieur du profil en U, comme montré sur la figure 4.

Le renfort 28 comporte un élément de renforcement 38 sous la forme d'une nervure 38 qui recouvre extérieurement la nervure 34. Dans le cas de la figure 4, la partie de renforcement 38 recouvre complètement la nervure 34.

Dans la variante de la figure 5, cette nervure 38 est composée de deux parties 38a et 38b espacées l'une de l'autre qui recouvrent chacune partiellement la nervure 34 .

Dans la forme de réalisation de la figure 6, on retrouve la partie emboutie de la figure 3 qui définit une nervure 34 d'un côté et une rainure 36 de l'autre.

Dans ce cas, l'élément de renforcement comporte à la fois un élément de renforcement 38 qui recouvre la nervure 34 et un élément de renforcement 40 qui recouvre la nervure 36. Autrement dit, l'élément de renforcement se trouve sur deux faces du profil.

Dans la forme de réalisation de la figure 7, on trouve seulement un élément de renforcement 40 à l'intérieur de la rainure 36.

Ainsi, l'élément de renforcement forme d'un côté une première nervure 40 qui recouvre la rainure 36 et de l'autre côté une deuxième nervure 38 qui recouvre la nervure 34. Ainsi, la partie emboutie peut être formée aussi bien sur la face interne de l'âme, c'est à dire ici à l'intérieur du profil en U, ou aussi bien sur la face externe de l'âme, c'est à dire à l'extérieur du profil en U.

Dans le cas d'un profil en U, il peut être avantageux de surmouler également de la matière plastique à l'intérieur du profil comme montré sur les figures 8, 9 et 10 et de prévoir des nervures supplémentaires de renforcement, en forme de croisillons. Les figures 8, 9 et 10 montrent trois typés de croisillons différents, respectivement 42, 44 et 46.

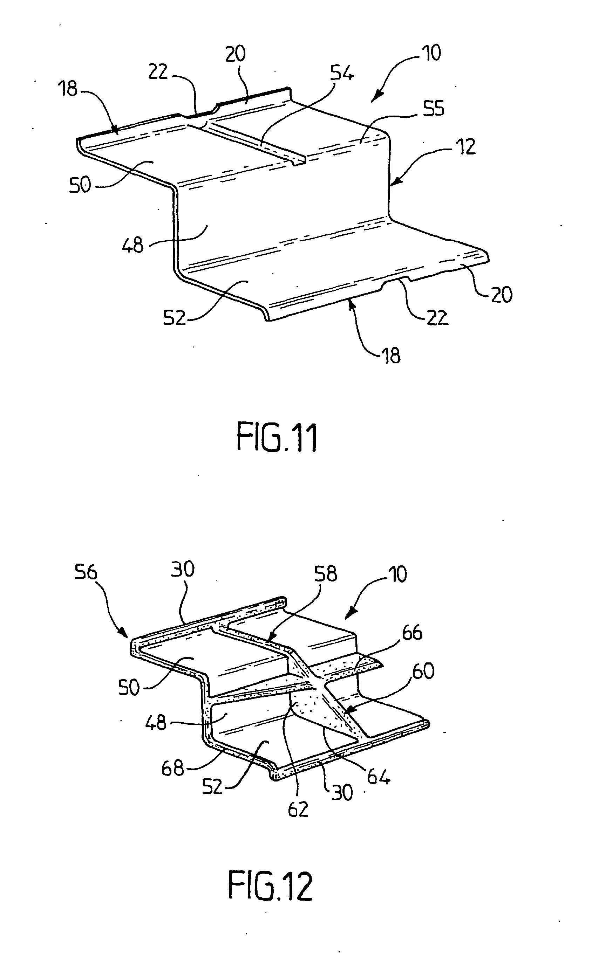

On se réfère maintenant à la figure 11 qui montre un autre insert 10 selon l'invention dont l'âme 12 présente ici une forme étagée ou en escalier. Elle comprend un fond 48 généralement plat auquel se raccordent à angle droit deux ailes 50 et 52, également généralement planes, qui s'étendent respectivement de deux côtés opposés par rapport au fond 48. Ces deux ailes 50 et 52 ont des régions marginales 18 analogues à celles décrites précédemment, chacune formant un bord relevé 20 muni d'un crénelage 22.

L'insert 10 comporte une partie emboutie 54 qui, dans l'exemple, est formée uniquement dans l'aile 50. Cette partie emboutie forme une rainure ou gorge dirigée vers l'extérieur et s'étendant depuis la région marginale 18 jusqu'à une ligne de pliage 55 qui relie l'aile 50 au fond 48. La partie emboutie 50, formant rainure, s'étend dans une direction généralement transversale, ici perpendiculaire, à la région marginale 18 de l'aile 50.

La figure 12 montre la structure hybride obtenue après surmoulage de l'insert 10 de la figure 11 par un renfort 56. Ce renfort 56 présente deux régions d'extrémités 30, en forme de lèvres à profil en U, qui recouvrent les régions marginales 18 de l'insert. Ces deux régions d'extrémité 30 sont réunies par un élément de renforcement 58 en forme de nervure qui est surmoulé dans la partie emboutie 54, en forme de rainure, formée dans l'aile 50. La partie 58 part d'une des régions d'extrémité 30, longe transversalement l'aile 50 et se prolonge par un renfort 60 de structure triangulaire présentant deux bords 62 et 64 qui viennent s'appliquer respectivement contre le fond 48 et l'aile 52. Ce renfort 60 aboutit à l'autre région d'extrémité 3 0.

Ainsi, les bords 62 et 64 sont appliqués sur des faces planes de l'insert et ne viennent pas coopérer avec une partie emboutie, à la différence de l'élément de renforcement 58. A l'élément 60, se raccorde un autre élément de renforcement 66 formant une nervure continue qui s'étend le long du fond 48 dans une direction généralement parallèle aux régions d'extrémité 30, c'est-à-dire dans la direction de l'axe Y.

Cet élément 66 aboutit à un élément surmoulé 68, à profil en escalier, qui recouvre la tranche de l'insert et qui s'étend entre les deux régions d'extrémités 30.

On comprendra que la structure composite de l'invention est susceptible de nombreuses variantes de réalisation, d'une part en ce qui concerne la structure de l'insert, et d'autre part, en ce qui concerne celle du renfort en matière plastique.

En règle générale, l'insert pourra posséder un profil choisi, le plus souvent, mais pas nécessairement, en forme générale de U.

La partie emboutie formée dans l'insert peut s'étendre sur une partie ou sur la totalité de l'insert entre deux régions marginales de celui-ci. Cette partie emboutie peut s'étendre seulement sur une partie de l'insert, comme dans le cas des figures 11 et 12.

Egalement, la forme de cette partie emboutie est susceptible de nombreuses variantes. Elle peut être réalisée sous la forme d'une rainure ou d'une nervure ou des deux à la fois. Dans tous les cas, l'élément de renforcement du renfort viendra coopérer avec cette partie emboutie en la recouvrant pour assurer un blocage par coopération de forme.

Le plus souvent, l'insert sera réalisé sous la forme d'une tôle métallique et l'élément de renforcement en une matière thermoplastique en particulier en polyamide.

L'invention s'applique tout particulièrement à la réalisation de faces avant de véhicules automobiles.

## Revendications

1. Structure composite comprenant un insert métallique (10) présentant une âme conformée (12) de profil choisi, ayant deux régions marginales opposées (18), ainsi qu'un renfort (28 ; 56) en matière plastique, surmoulé sur une partie au moins de l'insert (10),
**caractérisée en ce que** l'âme (12) de l'insert (10) comporte au moins une partie emboutie (24 ; 34 ; 54) qui s 'étend dans une direction généralement transversale par rapport à l'une au moins des régions marginales (18) de l'âme, et **en ce que** le renfort (28 ; 56) comporte au moins un élément de renforcement (32 ; 38 ; 40 ; 58) qui recouvre la partie emboutie (24 ; 34 ; 54) de l'insert et qui relie deux régions d'extrémité (30) du renfort (28) recouvrant respectivement les deux régions marginales (18) de l'âme (12) .

2. Structure composite selon la revendication 1, **caractérisée en ce que** la partie emboutie est une rainure (24), et **en ce que** l'élément de renforcement est une nervure (32) qui est reçue dans la rainure (24).

3. Structure composite selon la revendication 1, **caractérisée en ce que** la partie emboutie est une nervure (34) et **en ce que** l'élément de renforcement est une nervure (38) qui recouvre la nervure (34).

4. Structure composite selon la revendication 1, **caractérisée en ce que** la partie emboutie forme, d'une part, une rainure (36) qui débouche sur une face de l'âme (12) et, d'autre part, une nervure (34) qui débouche sur une autre face de l'âme, et **en ce que** l'élément de renforcement forme d'un côté une première nervure (40) qui recouvre la rainure (36) de l'insert et de l'autre côté une deuxième nervure (38) qui recouvre la nervure (34) de l'insert.

5. Structure composite selon l'une des revendications 1 à 4, **caractérisée en ce que** l'âme (12) de l'insert (10) présente un profil ouvert, en particulier en forme de U, avec une face interne et une face externe et **en ce que** la partie emboutie (24 ; 34 ; 54) est formée sur la face interne de l'âme.

6. Structure composite selon l'une des revendications 1 à 4, **caractérisée en ce que** l'âme (12) de l'insert (10) présente un profil ouvert, en particulier en forme de U, avec une face interne et une face externe, et **en ce que** la partie emboutie (24 ; 34 ; 54) est formée sur la face externe de l'âme.

7. Structure composite selon l'une des revendications 1 à 6, **caractérisée en ce que** l'une au moins des régions d'extrémité (30) du renfort est agencée sous la forme d'une lèvre qui recouvre une région marginale (18) de l'âme (12).

8. Structure composite selon l'une des revendications 1 à 7, **caractérisée en ce que** l'une au moins des régions d'extrémité (30) du renfort (28) est agencée sous la forme d'un bord crénelé (20, 22).

9. Structure composite selon l'une des revendications 1 à 8, **caractérisée en ce que** l'une au moins des régions d'extrémité (30) du renfort est agencée sous la forme d'un bord relevé (20).

10. Structure composite selon l'une des revendications 1 à 9, **caractérisée en ce que** la partie emboutie (24) de l'insert (10) s'étend de l'une à l'autre des régions marginales (18) de l'âme (12).

11. Structure composite selon l'une des revendications 1 à 9, **caractérisée en ce que** la partie emboutie (54) s'étend sur une partie de l'âme (12) entre les régions marginales (18) de l'âme.

12. Structure composite selon l'une des revendications 1 à 11, **caractérisée en ce qu'**elle fait partie intégrante d'au moins un élément d'une face avant de véhicule automobile.

## Claims

1. Composite structure comprising a metal insert (10) having a shaped core (12) of chosen profile, possessing two opposed marginal regions (18), and also a plastic reinforcement (28; 56) overmolded on at least part of the insert (10), **characterized in that** the core (12) of the insert (10) includes at least one deep-drawn portion (24; 34; 54) which extends in a generally transverse direction with respect to at least one of the marginal regions (18) of the core, and **in that** the reinforcement (28; 56) includes at least one reinforcing element (32; 38; 40; 58) which covers the deep-drawn portion (24; 34; 54) of the insert and which connects two end regions (30) of the reinforcement (28) covering the two marginal regions (18) of the core (12), respectively.

2. Composite structure according to Claim 1,
**characterized in that** the deep-drawn portion is a groove (24), and **in that** the reinforcing element is a rib (32) which is accommodated in the groove (24).

3. Composite structure according to Claim 1, **characterized in that** the deep-drawn portion is a rib (34) and **in that** the reinforcing element is a rib (38) which covers the rib (34).

4. Composite structure according to Claim 1,
**characterized in that** the deep-drawn portion forms, on the one hand, a groove (36) which emerges on one face of the core (12) and, on the other hand, a rib (34) which emerges on another face of the core, and **in that** the reinforcing element forms, on one side, a first rib (40) which covers the groove (36) of the insert and, on the other side, a second rib (38) which covers the rib (34) of the insert.

5. Composite structure according to one of Claims 1 to 4, **characterized in that** the core (12) of the insert (10) has an open profile, in particular a U-shaped profile, with an internal face and an external face and **in that** the deep-drawn portion (24; 34; 54) is formed on the internal face of the core.

6. Composite structure according to one of Claims 1 to 4, **characterized in that** the core (12) of the insert (10) has an open profile, in particular a U-shaped profile, with an internal face and an external face, and **in that** the deep-drawn portion (24; 34; 54) is formed on the external face of the core.

7. Composite structure according to one of Claims 1 to 6, **characterized in that** at least one of the end regions (30) of the reinforcement is arranged in the form of a lip which covers a marginal region (18) of the core (12).

8. Composite structure according to one of Claims 1 to 7, **characterized in that** at least one of the end regions (30) of the reinforcement (28) is arranged in the form of a notched edge (20, 22).

9. Composite structure according to one of Claims 1 to 8, **characterized in that** at least one of the end regions (30) of the reinforcement is arranged in the form of a raised edge (20).

10. Composite structure according to one of Claims 1 to 9, **characterized in that** the deep-drawn portion (24) of the insert (10) extends from one of the marginal regions (18) of the core (12) to the other.

11. Composite structure according to one of Claims 1 to 9, **characterized in that** the deep-drawn portion (54) extends over part of the core (12) between the marginal regions (18) of the core.

12. Composite structure according to one of Claims 1 to 11, **characterized in that** it forms an integral part of at least one element of a motor vehicle front face.

## Patentansprüche

1. Kompositstruktur, die einen Metalleinsatz (10) aufweist, der eine geformte Seele (12) mit ausgewähltem Profil aufweist, die zwei einander entgegengesetzte Randbereiche (18) hat, sowie eine Verstärkung (28; 56) aus Kunststoff, die auf mindestens einem Teil des Einsatzes (10) abgeformt ist,
**dadurch gekennzeichnet, dass** die Seele (12) des Einsatzes (10) mindestens einen gestanzten Teil (24; 34; 54;) aufweist, der sich in eine allgemeine Querrichtung zu mindestens einem der Randbereiche (18) der Seele erstreckt, und dass die Verstärkung (28; 56) mindestens ein Verstärkungselement (32; 38; 40; 58) aufweist, das den gestanzten Teil (24; 34; 54) des Einsatzes abdeckt und zwei Endbereiche (30) der Verstärkung (28) verbindet, die jeweils die zwei Endbereiche (18) der Seele (12) abdecken.

2. Kompositstruktur nach Anspruch 1, **dadurch gekennzeichnet, dass** der gestanzte Teil eine Rille (24) ist, und dass das Verstärkungselement eine Rippe (32) ist, die in der Rille (24) aufgenommen ist.

3. Kompositstruktur nach Anspruch 1, **dadurch gekennzeichnet, dass** der gestanzte Teil eine Rippe (34) ist, und dass das Verstärkungselement eine Rippe (38) ist, die die Rippe (34) abdeckt.

4. Kompositstruktur nach Anspruch 1, **dadurch gekennzeichnet, dass** der gestanzte Teil einerseits eine Rille (36) bildet, die auf einer Seite der Seele (12) mündet, und andererseits eine Rippe (34), die auf einer anderen Seite der Seele mündet, und dass das Verstärkungselement auf einer Seite eine erste Rippe (40) bildet, die die Rille (36) des Einsatzes abdeckt, und auf der anderen Seite eine zweite Rippe (38), die die Rippe (34) des Einsatzes abdeckt.

5. Kompositstruktur nach einem der Ansprüche 1 bis 4, **dadurch gekennzeichnet, dass** die Seele (12) des Einsatzes (10) ein offenes Profil aufweist, insbesondere in U-Form mit einer Innenseite und einer Außenseite, und dass der gestanzte Teil (24; 34; 54) auf der Innenseite der Seele ausgebildet ist.

6. Kompositstruktur nach einem der Ansprüche 1 bis 4, **dadurch gekennzeichnet, dass** die Seele (12) des Einsatzes (10) ein offenes Profil aufweist, insbesondere in U-Form, mit einer Innenseite und einer Außenseite, und dass der gestanzte Teil (24; 34; 54) auf der Außenseite der Seele ausgebildet ist.

7. Kompositstruktur nach einem der Ansprüche 1 bis 6, **dadurch gekennzeichnet, dass** mindestens einer der Endbereiche (30) der Verstärkung in der Form einer Lippe eingerichtet ist, die einen Randbereich (18) der Seele (12) abdeckt.

8. Kompositstruktur nach einem der Ansprüche 1 bis 7, **dadurch gekennzeichnet, dass** mindestens einer der Endbereiche (30) der Verstärkung (28) in der Form eines gerippten Rands (20, 22) eingerichtet ist.

9. Kompositstruktur nach einem der Ansprüche 1 bis 8, **dadurch gekennzeichnet, dass** mindestens einer der Endbereiche (30) der Verstärkung in der Form eines angehobenen Rands (20) eingerichtet ist.

10. Kompositstruktur nach einem der Ansprüche 1 bis 9, **dadurch gekennzeichnet, dass** sich der gestanzte Teil (24) des Einsatzes (10) von dem einen zu dem anderen der Randbereiche (18) der Seele (12) erstreckt.

11. Kompositstruktur nach einem der Ansprüche 1 bis 9, **dadurch gekennzeichnet, dass** sich der gestanzte Teil (54) auf einen Teil der Seele (12) zwischen den Randbereichen (18) der Seele erstreckt.

12. Kompositstruktur nach einem der Ansprüche 1 bis 11, **dadurch gekennzeichnet, dass** sie fester Bestandteil mindestens eines Elements einer Vorderseite eines Kraftfahrzeugs ist.
